Europäisches Patentamt

European Patent Office

Office européen des brevets

(11) Veröffentlichungsnummer: **0 336 989**

**A1**

(12) **EUROPÄISCHE PATENTANMELDUNG**

(21) Anmeldenummer: 88105840.8

(22) Anmeldetag: 13.04.88

(51) Int. Cl.4: **B29C 49/48 , B29D 23/18**

(43) Veröffentlichungstag der Anmeldung:
**18.10.89 Patentblatt 89/42**

(84) Benannte Vertragsstaaten:
**AT BE CH DE ES FR GB GR IT LI LU NL SE**

(71) Anmelder: **Möller Werke GmbH**
**Auf dem Kupferhammer**
**D-4800 Bielefeld 14(DE)**

(72) Erfinder: **Gonzales, Augusto E. Salvo**
**Wiclefstr. 45**
**D 1000 Berlin 21(DE)**

(74) Vertreter: **Thielking, Bodo, Dipl.-Ing. et al**
**Patentanwälte Dipl.-Ing. Bodo Thielking**
**Dipl.-Ing. Otto Elbertzhagen Gadderbaumer**
**Strasse 20**
**D-4800 Bielefeld 1(DE)**

(54) Verfahren zum Herstellen von aus thermoplastischem Material bestehenden Hohlkörpern, insbesondere Faltenbälgen.

(57) Bei einem Verfahren zum Herstellen von aus thermoplastischem Material bestehenden Hohlkörpern, insbesondere Faltenbälgen wird eine Blasform (1) verwendet, die zwei Hälften aufweist, deren Trennebene durch die Längsachse (7) des Hohlkörpers verläuft und die in radialer Richtung auseinander- und zusammenfahrbar ist. Ein Vorformling wird in die Blasform (1) eingelegt und mittels Innendrucks aufgeweitet. Die Blasform (1) weist mindestens eine Quertrennebene (3a;3b;3c;3d;3e) auf, die quer zu der durch die Längsachse (7) verlaufenden Trennebene verläuft. Der in die Blasform (1) eingelegte Vorformling (6) wird im axial auseinandergefahrenen Zustand der Blasform (1) aufgeweitet. Anschließend wird die Blasform in axialer Gegenrichtung zusammengefahren, bis die Blasformsegmente (1a;1b;1c;1d; 1e;1f) in der Quertrennebene (3a) bzw. in den Quertrennebenen (3a;3b;3c;3d;3e) aneinander anliegen.

Fig. 5

## Verfahren zum Herstellen von aus thermoplastischem Material bestehenden Hohlkörpern, insbesondere Faltenbälgen

Die Erfindung betrifft ein Verfahren zum Herstellen von aus thermoplastischem Material bestehenden Hohlkörpern, insbesondere Faltenbälgen, in einer Blasform, die zwei Hälften aufweist, deren Trennebene durch die Längsachse des Hohlkörpers verläuft und die in radialer Richtung auseinander-und zusammenfahrbar ist, wobei ein Vorformling in die Blasform eingelegt und mittels Innendrucks radial aufgeweitet wird.

Die Herstellung von Hohlkörpern, auch von Faltenbälgen,erfolgt üblicherweise in Blaswerkzeugen dadurch, daß ein thermoplastisches Material durch Aufbringen eines Innendrucks radial aufgeweitet wird. Dabei kommt es zur Anlage an die Innenkontur des Werkzeughohlraumes. Diese Kontur entspricht der Außenkontur des fertigen Hohlkörpers.

Bei diesem radialen Verformungsvorgang des thermoplastischen Materials erreicht das aufgeweitete Material zunächst diejenigen Konturbereiche, die am weitesten nach innen stehen und die bei einem Faltenbalg später die so bezeichneten Balginnenspitzen bilden. Erst danach dehnt sich das Material in die zwischen diesen nach außen ragenden spitzen Räume aus. Es werden also die sogenannten Balgaußenspitzen erst gebildet, wenn sich das thermoplastische Material vollständig an den Werkzeughohlraum angelegt hat.

Es hat sich in der Praxis gezeigt, daß diese Verformung in gewisser Weise zu einem Fließen des Materials zwischen den durch die Innenspitzen gebildeten Auflagepunkten führt. Damit ist zwangsläufig eine unerwünschte Wandstärkenschwankung verbunden. Die Wandstärke des fertigen Balgs ist im Bereich der Balginnenspitzen bei dem bekannten Herstellungsverfahren wesentlich größer als in den Wandteilen, die in Richtung auf die Balgaußenspitzen zu verlaufen. Diese unerwünschten Schwächungen der Wandstärke in den nach außen verlaufenden Wandteilen führen zu einer verringerten Lebensdauer sämtlicher entsprechender Hohlkörper, insbesondere auch zu einer verringerten Lebensdauer der Faltenbälge. Die Faltenbälge reißen oder brechen in erster Linie an den Stellen mit unerwünscht verringerter Wandstärke.

Ausgehend von dem bekannten Verfahren liegt der Erfindung die Aufgabe zugrunde, ein Verfahren sowie ein Blaswerkzeug zur Durchführung des Verfahrens zu schaffen, mit denen es möglich ist, Hohlkörper, und insbesondere Faltenbälge aus thermoplastischem Material herzustellen, die eine möglichst gleichmäßige Wandstärke aufweisen.

Die Lösung dieser Aufgabe erfolgt dadurch, daß die Blasform quer zu der durch die Längsachse verlaufenden Trennebene mindestens eine senkrecht hierzu verlaufende Quertrennebene aufweist und im axial auseinandergefahrenen Zustand der Blasform der eingelegte Vorformling aufgeweitet wird und anschließend die Blasform in axialer Gegenrichtung bis zum Anliegen der Blasformsegmente in der Quertrennebene bzw. in den Quertrennebenen zusammengefahren wird.

Die Erfindung löst das geschilderte Problem dadurch, daß man -ebenso wie bei dem herkömmlichen Verfahren- zunächst durch eine radiale Aufweitung den Vorformling soweit aufweitet, daß er an den Balginnenspitzen, also den am weitesten nach innen ragenden Teilen des Werkzeughohlraums anliegt. In diesem ersten Zustand der Verformung sind die einzelnen Werkzeugsegmente auseinandergezogen. Der axiale Abstand zwischen den Balginnenspitzen ist also in diesem Zustand größer als am späteren fertigen Balg. Bis zu diesem Zeitpunkt ist somit bei der radialen Verformung eine im wesentlichen gleiche Wandstärke des sich verformenden Hohlkörpers gesichert. Damit diese Wandstärke nun auch in dem Bereich beibehalten wird, der jeweils zwischen den Balginnenspitzen liegt, können die einzelnen Werkzeugsegmente in Achsrichtung zusammengeschoben werden. Während weiterer Innendruck aufgebracht wird und das thermoplastische Material zwischen den Balginnenspitzen sich weiter aufweitet, werden die Werkzeugsegmente zusammengeschoben. Dies kann auch bei konstant gehaltenem Luftvolumen erfolgen, wobei sich der Druck erhöht. Durch das Zusammenschieben verringert sich der axiale Abstand zwischen den benachbarten Balginnenspitzen des Werkzeuges. Auf diese Weise kann das Material, das vorher eine größere axiale Länge aufwies, sich so verformen, daß trotz des radialen Innendrucks, der das thermoplastische Material nach außen in Richtung der späteren Balgaußenspitzen drückt, ein Nachfließen des Materials aus der größeren axialen Länge erfolgt. Im Endzustand, wenn die Form vollständig zusammengeschoben ist und damit ihre Innenkontur der Außenkontur des fertigen Balgs entspricht, liegt das Material an den Balgaußenspitzen der Form an und die Wandstärke ist dabei nahezu gleich geblieben.

Weitere Merkmale der Erfindung sind in den weiteren Unteransprüchen beschrieben.

Nachstehend werden zwei bevorzugte Ausführungsformen der Erfindung anhand der Zeichnung im einzelnen beschrieben.

Alle Zeichnungsdarstellungen zeigen Längsschnitte durch jeweils eine Hälfte eines Blaswerkzeugs. Die andere zu der gezeigten Hälfte komplementäre Hälfte ist nicht dargestellt und spiegelsymmetrisch ausgebildet. Es zeigen:

Figur 1 eine Hälfte eines Blaswerkzeugs im axial zusammengeschobenen Zustand,

Figuren 2 bis 5 die Blasformhälfte gemäß Figur 1 in unterschiedlich weit auseinandergezogenem Zustand der einzelnen Segmente,

Figuren 6 bis 9 eine weitere Ausführungsform einer Blasformhälfte ebenfalls in unterschiedlich weit auseinandergezogenem Zustand.

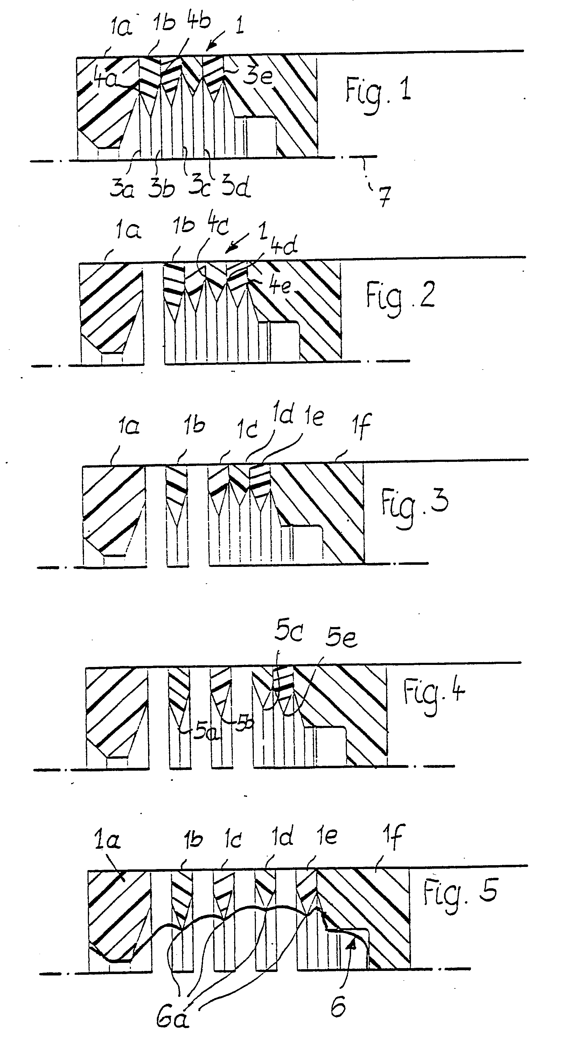

Zunächst zu Figuren 1 bis 5:

Das insgesamt mit 1 bezeichnete Blaswerkzeug besteht -wie bereits gesagt- aus zwei zueinander komplementären Hälften. Wenn nachstehend von Blasformsegementen die Rede ist, muß ergänzt werden, daß diese Blasformsegmente jeweils doppelt vorgesehen sind.

Die Blasform 1 besteht aus einzelnen Blasformsegmenten 1a bis 1f. Die Blasform 1 und damit auch deren Blasformsegmente sind entlang einer Längstrennebene teilbar, die durch eine Längsmittelachse 7 verläuft. Die Blasformsegmente 1a bis 1f ergänzen sich zu einzelnen Ringelementen. Die Blasformsegmente 1a bis 1f besitzen quer zur Längstrennebene verlaufende Quertrennebenen 3a bis 3e. Diese Quertrennebenen 3a bis 3e verlaufen durch die bei der dargestellten Balgform ersichtlichen Balgaußenspitzen 4a, 4b, 4c, 4d und 4e. Die Balginnenspitzen der Form sind mit 5a, 5b, 5c und 5e bezeichnet.

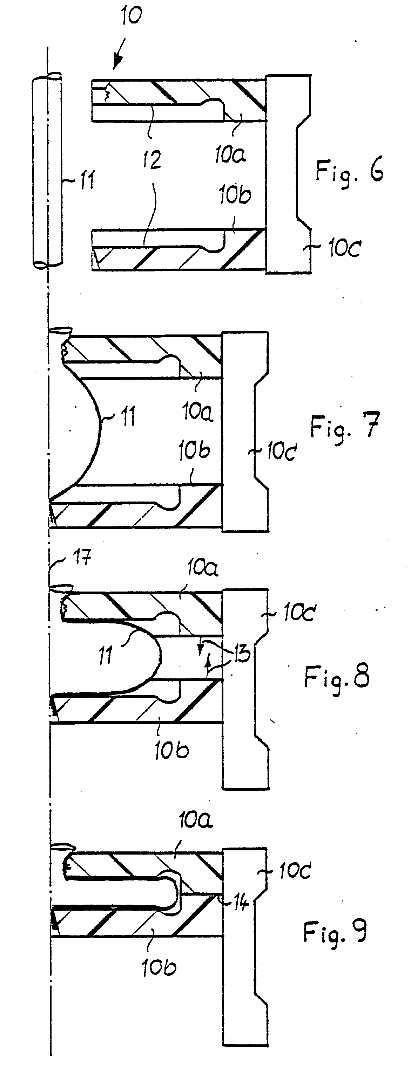

Die Blasform ist in Richtung der Längsachse 7 auseinanderfahrbar, wie dies beispielsweise in Figur 5 dargestellt ist. In der Darstellung gemäß Figur 5 ist ersichtlich, daß der Abstand zwischen den Balginnenspitzen 5a, 5b, 5c und 5e größer ist als der beim fertigen Balg vorgesehene axiale Abstand, wie er in Figur 1 erkennbar ist. Sobald sich bei Aufbringung eines Innendrucks auf den Vorformling 6 dessen thermoplastisches Material an die Balginnenspitzen 5a bis 5e angelegt hat, erfolgt ein Zusammenschieben der einzelnen Segmente, wie es beispielsweise im rechten Bereich von Figur 5 angedeutet ist. Bei diesem Zusammenschieben wird das aufgeweitete Material in den Zwischenraum gedrückt und nähert sich den Balgaußenspitzen möglichst bis zur Anlage. Da sich der axial gemessene Abstand hierbei verkürzt, kann das Material bei nahezu gleichbleibender Wanddicke in diese zusammengeschobenen, die Außenfalten bildenden Bereiche einfließen.

In den Figuren 4 bis 1 ist die Abfolge des Zusammenschie bens dargestellt bis die Blasformsegmente ihre endgültige Lage eingenommen haben. Es ist möglich, die Abfolge des Zusammenschiebens auch in anderer Reihenfolge und anderer zeitlicher Abfolge vorzunehmen.

Der Vorformling 6 ist lediglich in Figur 5 dargestellt, selbstverständlich liegt er stets innerhalb der zusammenzuschiebenden Form. Mit 6a sind die Bereiche des Vorformlings 6 bezeichnet, die später Balginnenspitzen werden.

In der Darstellung gemäß Figuren 6 bis 9 ist ein anderer Blasformkörper dargestellt. Dort wird ein Vorformling 11 in ein aus Segmenten 10a und 10b bestehendes Blaswerkzeug eingelegt und anschließend durch Innendruck aufgeweitet. Auch bei der Darstellung gemäß Figuren 6 bis 9 ist lediglich eine der beiden Hälften der gesamten Blasform dargestellt. Die Blasform 10 besitzt bei dieser Ausführungsform zwei ringförmige Blasformsegmente 10a und 10b, die entlang eines Blasformteils 10c in Richtung der Längsachse 17 auseinander- und zusammenfahrbar sind. Bei der Darstellung gemäß Figur 7 hat der Vorformling 11 schon nahezu seine größte Weite erreicht. Anschließend werden die Segmente 10a und 10b in Richtung der Pfeile 13 (vgl. Figur 8) in Achsrichtung aufeinander zugeschoben, bis sie schließlich (Figur 9) ihre Endlage erreicht haben und in der Quertrennebene 14 aneinanderliegen.

Die Erfindung lehrt erstmalig, daß eine Blasform nicht lediglich in Längsrichtung geteilt ist sondern auch in Querrichtung. Dabei ist nicht nur die Teilung in Querrichtung wesentlich, welche bereits bekannt ist bei Formen, die aus einzelnen Ringen oder Ringsegmenten zusammengesetzt sind. Wesentlich ist die Tatsache, daß zur Durchführung des er findungsgemäßen Verfahrens die einzelnen Segmente in Achsrichtung gegeneinander verfahren werden können. Wesentlich ist also die Möglichkeit, die einzelnen Segmente bzw. Segmenthälften sowohl in radialer als auch in axialer Richtung verfahren zu können.

**Ansprüche**

1. Verfahren zum Herstellen von aus thermoplastischem Material bestehenden Hohlkörpern, insbesondere Faltenbälgen, in einer Blasform, die zwei Hälften aufweist, deren Trennebene durch die Längsachse des Hohlkörpers verläuft und die in radialer Richtung auseinander- und zusammenfahrbar ist, wobei ein Vorformling in die Blasform eingelegt und mittels Innendrucks radial aufgeweitet wird,
dadurch gekennzeichnet,
daß die Blasform (1; 10) quer zu der durch die Längsachse (7;17) verlaufenden Trennebene mindestens eine senkrecht hierzu verlaufende Quertrennebene (3a;3b;3c; 3d;3e;14) aufweist und im axial auseinandergefahrenen Zustand der Blasform (1;10) der eingelegte Vorformling (6;11) aufgeweitet wird und anschließend die Blasform (1;10) in axialer Gegenrichtung bis zum Anliegen der Blasformsegmente (1a;1b;1c;1d;1e;1f;10a;10b) in der Quertrennebene (3a;14) bzw. den Quertrennebenen (3a;3b; 3c;3d;3e) zusammengefahren wird.

2. Verfahren nach Anspruch 1,
dadurch gekennzeichnet,
daß die radiale Aufweitung des Vorformlings (6;11) im axial auseinandergefahrenen Zustand der Blasform (1;10) zumindest bis zur Anlage an die die kleinsten Außen durchmesser, insbesondere die Balginnenspitzen (5a;5b; 5c;5e) bestimmenden Wandbereiche der Blasform erfolgt.

3. Verfahren nach Anspruch 1 oder 2,
dadurch gekennzeichnet,
daß die zwischen den Balginnenspitzen (5a;5b;5c;5e) verbleibenden Bereiche zumindest bis annähernd auf den endgültigen Außendurchmesser der Balgaußenspitzen (4a;4b; 4c;4d;4e) radial aufgeweitet werden.

4. Verfahren nach Anspruch 3,
dadurch gekennzeichnet,
daß die radiale Aufweitung der zwischen den Balginnenspitzen (5a;5b;5c;5e) verbliebenen Bereiche gleichzeitig mit einer axialen Verkürzung dieser Abschnitte durch ein Zusammenfahren der Blasformsegmente (1a;1b;1c;1d;1e;1f) in axialer Richtung erfolgt.

5. Verfahren nach einem oder mehreren der Ansprüche 1 bis 4,
dadurch gekennzeichnet,
daß das in axialer Richtung erfolgende Zusammenfahren der Blasformsegmente (1a;1b;1c;1d;1e;1f) zu unterschiedlichen Seiten erfolgt.

6. Blasform zur Durchführung des Verfahrens nach einem oder mehreren der Ansprüche 1 bis 5, welche eine Innenkontur aufweist, die der fertigen Außenkontur des Hohlkörpers, insbesondere des Faltenbalgs entspricht und in zwei Blasformhälften entlang einer durch die Längsachse verlaufenden Trennebene unterteilt ist,
dadurch gekennzeichnet,
daß sie zusätzlich quer zu der Längstrennebene ver laufende Quertrennebenen (3a;3b;3c;3d;3e) aufweist, die durch die Balgaußenspitzen verlaufen, wobei die einzelnen Segmente (1a;1b;1c;1d;1e;1f) in axialer Richtung auseinander bewegbar sind und axial bis zur Anlage in den Quertrennebenen (3a;3b;3c;3d;3e) aneinander zusammenbewegbar sind, wobei die Blasform (1;10) in dem axialen Anlagezustand eine Innenkontur aufweist, die der Außenkontur des fertigen Faltenbalgs entspricht.

7. Blasform nach Anspruch 6,
dadurch gekennzeichnet,
daß die Segmente (1a;1b;1c;1d;1e;1f) ringförmig ausgebildet sind.

Fig. 1

Fig. 2

Fig. 3

Fig. 4

Fig. 5

10

11    12    10a

10b

10c

Fig. 6

11    10a

10b    10c

Fig. 7

17    10a

10c

11    13

10b

Fig. 8

10a

10c

14

10b

Fig. 9

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-3 371 381  (N. LOUTH)<br>* Spalte 5, Zeile 7 - Spalte 6, Zeile 28; Figuren *<br>--- | 1-7 | B 29 C  49/48<br>B 29 D  23/18 |
| X | GB-A- 652 810  (DUNLOP)<br>* Seite 4, Zeile 110 -Seite 5, Zeile 11; Figuren *<br>--- | 1-7 | |
| X | DE-A-1 753 632  (TUBOFLEX)<br>* Ansprüche; Figuren *<br>--- | 1-7 | |
| X | US-A-4 075 187  (T.K. OLCOTT)<br>* Insgesamt *<br>--- | 1-7 | |
| T | DE-A-3 635 402  (A. SALVO GONZALEZ)<br>* Insgesamt *<br>--- | | |
| A | PATENT ABSTRACTS OF JAPAN, Band 9, Nr. 128 (M-384)[1851], 4. Juni 1985; & JP-A-60 12 228 (KIYOORAKU K.K.) 22-01-1985<br>* Zusammenfassung *<br>--- | | |
| A | FR-A-1 479 870  (FARBWERKE HOECHST)<br>--- | | |
| A | US-A-4 617 166  (C. IRWIN et al.)<br>----- | | |

**RECHERCHIERTE SACHGEBIETE (Int. Cl.4)**

B 29 C

Der vorliegende Recherchenbericht wurde für alle Patentansprüche erstellt

| Recherchenort | Abschlußdatum der Recherche | Prüfer |
|---|---|---|
| DEN HAAG | 08-12-1988 | SZAMOCKI G.J.A. |